# EUROPÄISCHE PATENTSCHRIFT

(11) **EP 2 791 482 B1**
(45) Veröffentlichungstag und Bekanntmachung des Hinweises auf die Patenterteilung: **23.03.2016**
(21) Anmeldenummer: 12798748.5
(22) Anmeldetag: 11.12.2012
(51) Int. Cl.: F01N 3/027, F01N 3/20, F01N 3/28, F01N 13/00

(54) **STÜTZSTIFT FÜR EINEN ELEKTRISCH BEHEIZBAREN WABENKÖRPER**
SUPPORTING PIN FOR AN ELECTRICALLY HEATABLE HONEYCOMB BODY
BROCHE DE SUPPORT POUR UN CORPS EN NID D'ABEILLES CHAUFFÉ ÉLECTRIQUEMENT

(30) Priorität: 12.12.2011 DE 102011120720
(43) Veröffentlichungstag der Anmeldung: 22.10.2014
(73) Patentinhaber: Continental Automotive GmbH, 30165 Hannover (DE)
(72) Erfinder: HIRTH, Peter, 51503 Rösrath (DE); HODGSON, Jan, 53840 Troisdorf (DE); BAUER, Peter, 53721 Siegburg (DE)
(86) Internationale Anmeldenummer: PCT/EP2012/075061
(87) Internationale Veröffentlichungsnummer: WO 2013/087616

(56) Entgegenhaltungen:
- WO-A1-03/038247
- DE-A1-102007 025 417
- DE-A1-102008 035 561
- DE-B4- 10 055 447

## Beschreibung

Die vorliegende Erfindung betrifft das Gebiet der elektrisch beheizbaren Wabenkörper, insbesondere als Komponenten in Abgasbehandlungsanlagen von Verbrennungsmotoren. Abgasreinigungsanlagen von Verbrennungsmotoren, insbesondere bei Kraftfahrzeugen, enthalten Filter und/oder katalytisch aktive Elemente, deren Temperatur durch elektrisch beheizbare Wabenkörper beeinflussbar ist. Die mechanisch stabile, aber elektrisch isolierende Halterung von elektrisch beheizbaren Wabenkörpern stellt eine technische Herausforderung dar.

Aus der WO 96/10127 ist das Prinzip der Abstützung eines elektrisch beheizbaren Wabenkörpers an einem benachbarten ersten Wabenkörper bekannt. Die beschriebene Anordnung stellt eine sichere, schwingungsarme Anordnung mit gleichbleibenden elektrisch isolierenden Abständen sicher.

Aus der DE 100 55 447 B4 ist ein besonderer Aufbau eines für elektrisch beheizbare Wabenkörper geeigneten elektrisch isolierenden Verbindungselementes bekannt. Der dort beschriebene Stützstift enthält einen metallischen Kern, der elektrisch isoliert gehaltert ist. Dessen Herstellung ist relativ aufwendig und der maximal erreichbare Abstand zwischen Stellen mit möglicherweise unterschiedlichem elektrischem Potential ist relativ gering.

Der vorliegenden Erfindung liegt die Aufgabe zugrunde, Stützstifte zu entwickeln, welche auch bei Verwendung höherer elektrischer Spannungen zur Beheizung eines elektrisch beheizbaren Wabenkörpers eine gute Haltbarkeit und sichere elektrische Isolierung ermöglichen. Insbesondere sollen die Stifte für Spannungen von 24 V [Volt], 36 V, 48 V oder höher geeignet sein.

Zur Lösung dieser Aufgabe dient ein Stützstift nach dem Anspruch 1. Vorteilhafte Ausgestaltungen, die einzeln oder in technischen sinnvollen Kombinationen untereinander auftreten, sind in den abhängigen Ansprüchen angegeben.

Ein erfindungsgemäßer Stützstift dient zur Abstützung eines elektrisch beheizbaren Wabenkörpers an einem ersten Wabenkörper, wobei der Stützstift einen ersten Endbereich, einen zweiten Endbereich und einen Zwischenbereich aufweist. Dieser zeichnet sich dadurch aus, dass der Stützstift einen Kern aus keramischem, elektrisch nicht leitfähigem Material aufweist, an mindestens einem Endbereich eine metallisierte Oberfläche und einen elektrisch nicht leitfähigen Zwischenbereich hat mit einer Länge von mindestens 3 mm (Millimeter), vorzugsweise mindestens 5 mm und insbesondere bis maximal 15 mm.

Es hat sich bei Versuchen herausgestellt, dass moderne Industriekeramiken hohe mechanische Belastungen selbst bei Biege- oder Scherkräften aushalten und auch für die Temperaturverhältnisse in Abgasreinigungssystemen und die dort herrschenden sonstigen Bedingungen geeignet sind. Während auf metallischen Kernen basierende bekannte Stützsysteme für Spannungen wie beispielsweise 48 V nicht leicht elektrisch isoliert werden können, ist diese Problematik bei einem keramischen Kern und genügend Abstand von elektrisch leitfähigen Teilen auf unterschiedlichem Potentiäl viel besser beherrschbar.

Zur Befestigung eines erfindungsgemäßen Stützstifts an einem metallischen Wabenkörper ist ein Endbereich mit einer metallisierten Oberfläche besonders geeignet. Ein solcher Endbereich kann zum Beispiel durch Löten mit einem metallischen Wabenkörper fest verbunden werden. Die Länge des Zwischenbereichs richtet sich nach der zur Beheizung des elektrisch beheizbaren Wabenkörpers verwendeten elektrischen Spannung und sollte mindestens 3 mm betragen. Je nach den Betriebsbedingungen können deutlich höhere Längen des Zwischenbereichs sinnvoll sein, beispielsweise wenn mit Rußablagerungen zu rechnen ist oder auch falls Feuchtigkeit vor Beginn der Beheizung auftreten kann.

In einer bevorzugten Ausführungsform sind beide Endbereiche des Stützstifts metallisiert, so dass eine beidseitige Einlötung in metallische Wabenkörper möglich ist.

In einer weiteren Ausführungsform weist der erste Endbereich eine geringere Querschnittsfläche auf als die Querschnittsfläche des zweiten Endbereiches. Damit haben der erste Endbereich und der zweite Endbereich unterschiedliche Querschnittsflächen, wodurch eine Verwendung zwischen zwei Wabenkörpern mit unterschiedlichen Wabengrößen ermöglicht wird.

In einer besonders bevorzugten Ausführungsform ist der Stützstift rotationssymmetrisch ausgebildet, wodurch im Allgemeinen bei der Wahl geeigneter Durchmesser an beiden Endbereichen eine sichere Befestigung in Wabenkörpern auch mit unterschiedlichen Wabenformen möglich ist.

In einer weiteren Ausführungsform ist der Zwischenbereich des Stützstiftes mit einer Oberfläche ausgestattet, die die Ablagerung von Ruß erschwert, was insbesondere durch eine glatte Oberfläche erreicht werden kann. Damit ist insbesondere gemeint, dass die Oberfläche im Zwischenbereich eine geringere Ablagerungsneigung für Ruß bildet als die Endbereiche und/oder handelsüblicher Draht. Auch andere Ablagerungen abweisende Oberflächenbehandlungen, beispielsweise eine Nanobeschichtung, sind möglich.

In einer weiteren bevorzugten Ausführungsform weist der Stützstift zwischen mindestens einem Endbereich und dem Zwischenbereich einen vorstehenden Kragen auf, der insbesondere auch als mechanischer Anschlag beim Einschieben des Stützstifts in eine Wabe eines Wabenkörpers dienen kann. Je nach Ausformung des Kragens ist darüber hinaus eine den Zwischenbereich vor Ablagerungen schützende Strömungsbeeinflussung möglich. Der Kragen kann vollumfänglich oder auch nur nach Art eines Kragenstutzens ausgeführt sein.

Geht man davon aus, dass elektrisch leitfähige Ablagerungen nicht immer ganz verhindert werden können, so ist eine weitere Ausführungsform der Erfindung von besonderem Vorteil, bei der der Zwischenbereich eine Struktur aufweist, die den Kriechweg für an seiner Oberfläche fließende, elektrische Kriechströme zwischen dem ersten Endbereich und dem zweiten Endbereich verlängert. Dies kann insbesondere durch Nuten, Wellungen und/oder Verdickungen an der Oberfläche bewirkt werden, wie dies beispielsweise bei Hochspannungsisolatoren bekannt ist.

Das Einsetzen von Stützstiften in Waben (Kanäle) eines Wabenkörpers kann erleichtert werden, indem mindestens ein Endbereich der Stützstifte angespitzt ist. Ein kegelförmiges Ende eines im Durchmesser an die Größe einer Wabe angepassten Endbereichs ermöglicht ein präzises Einsetzen von Stützstiften und die Schaffung geeigneter Anlageflächen zum späteren Verlöten. So kann eine haltbare Einheit zwischen Stützstift und Wabenkörper gebildet werden.

Die Erfindung findet insbesondere Anwendung bei einer Anordnung, umfassend mindestens einen elektrisch beheizbaren Wabenkörper, der an einem ersten Wabenkörper mittels einer Vielzahl von Stütz stiften (stirnseitig) abgestützt ist, wobei mindestens ein Teil der Stützstifte, bevorzugt alle Stützstifte, nach der hier erfindungsgemäß beschriebenen Art ausgeführt ist. Dabei ist besonders bevorzugt, dass der Stützstift mit mindestens einem Endbereich, bevorzugt mit beiden Endbereichen, in eine Wabe eines Wabenkörpers bzw. beider Wabenkörper eingelötet ist.

Weitere Einzelheiten und Ausführungsbeispiele der Erfindung, auf die diese jedoch nicht beschränkt ist, werden im Folgenden anhand der Zeichnungen näher erläutert. Es zeigen:
- Fig. 1:: einen zum Einsetzen in einen Wabenkörper ausgerichteten Stütz stift,
- Fig. 2:: einen Stützstift mit zwei unterschiedlich dicken Endbereichen,
- Fig. 3:: einen Stützstift mit Kragen,
- Fig. 4:: einen Stützstift mit angespitzten Enden und einem gewellten Zwischenbereich,
- Fig. 5:: einen in seiner Querschnittsform an metallische Wabenkörper angepassten Stützstift und
- Fig. 6:: die schematische Anwendung von Stützstiften zwischen einem ersten Wabenkörper und einem elektrisch beheizbaren Wabenkörper.

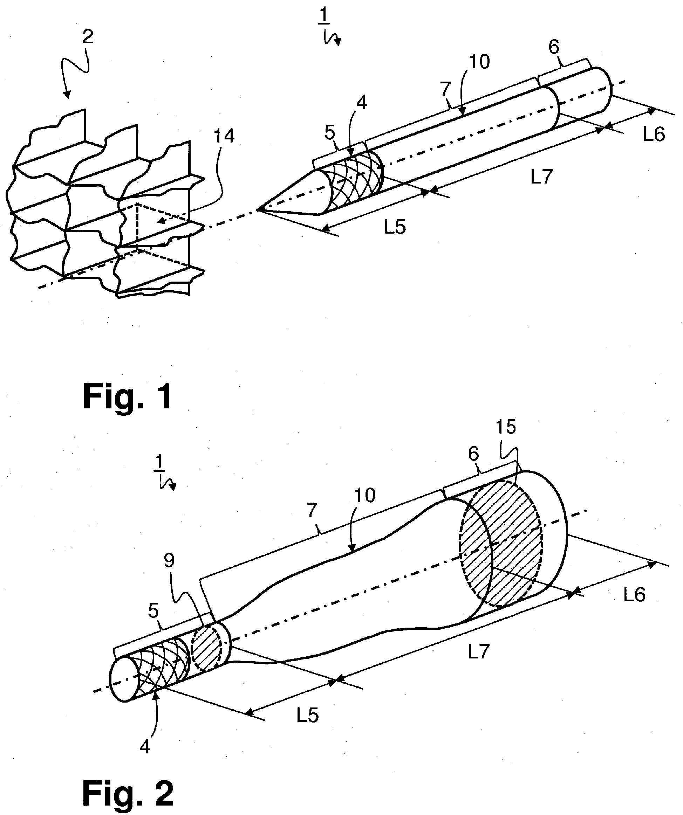

Fig. 1 zeigt schematisch einen Teil eines ersten Wabenkörpers 2 mit Waben 14 und einen zum Einsetzen in diesen ersten Wabenkörper 2 ausgerichteten erfindungsgemäßen Stützstift 1. Dieser Stützstift 1 besteht im Wesentlichen aus keramischem Material, weist einen ersten Endbereich 5, einen zweiten Endbereich 6 und einen Zwischenbereich 7 auf. Mindestens ein Endbereich, im vorliegenden Fall der erste Endbereich 5, hat eine metallisierte Oberfläche 4, wodurch ein späteres Einlöten in eine metallische Wabe 14 erleichtert wird. Der erste Endbereich 5 kann wie im vorliegenden Ausführungsbeispiel zur leichteren Einfügung angespitzt sein. Die Länge L7 des Zwischenbereichs 7 beträgt mindestens 3 mm, vorzugsweise 5 bis 15 mm, um eine elektrische Isolierung auch von Spannungen bis 48 V oder darüber zwischen den beiden Endbereichen 5, 6 sicherzustellen. Die Länge L5 des ersten Endbereichs 5 und die Länge L6 des zweiten Endbereichs 6 sind so bemessen, dass eine sichere Befestigung in einem ersten Wabenkörper 2 und einem hier nicht dargestellten elektrisch beheizbaren Wabenkörper möglich ist.

Fig. 2 zeigt schematisch ein Ausführungsbeispiel eines Stützstifts 1 mit unterschiedlich dicken Endbereichen 5, 6. Der erste Endbereich 5 hat wiederum eine metallisierte Oberfläche 4 und eine erste Querschnittsfläche 9, die kleiner ist als die zweite Querschnittsfläche 15 des zweiten Endbereichs 6. Der Zwischenbereich 7 bewirkt in einem geeigneten Verlauf seiner Oberfläche 10 eine Anpassung der Form von der ersten Querschnittsfläche 9 zur zweiten Querschnittsfläche 15. Die Oberfläche 10 kann auch besonders geglättet sein, um Rußablagerungen zu erschweren.

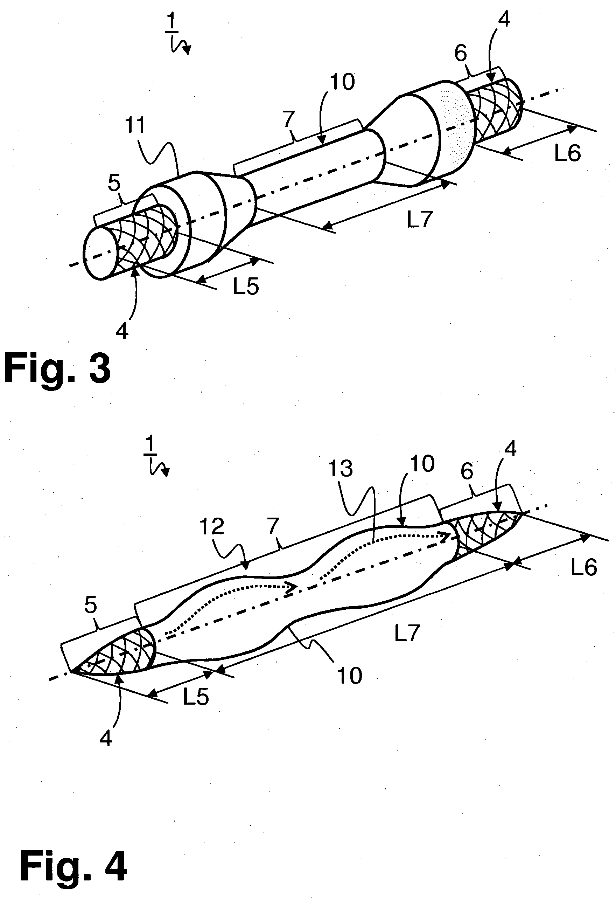

Fig. 3 zeigt ein weiteres Ausführungsbeispiel eines erfindungsgemäßen Stützstifts 1, der zwischen dem ersten Endbereich 5 und dem Zwischenbereich 7 einen vorstehenden Kragen 11 aufweist. Im vorliegenden Ausführungsbeispiel ist der zweite Endbereich 6 ebenfalls mit einem Kragen ausgestattet und der ganze Stützstift 1 rotationssymmetrisch gestaltet. Der vorstehende Kragen 11 dient an seiner dem ersten Endbereich 5 zugewandten Seite als Anschlag beim Einschieben des Stützstifts 1 in einen Wabenkörper. Der Bereich zwischen dem vorstehenden Kragen 11 und dem Zwischenbereich 7 kann beispielsweise konisch gestaltet sein, um Rußablagerungen im Zwischenbereich 7 zu vermindern.

Fig. 4 zeigt schematisch ein weiteres Ausführungsbeispiel eines Stützstifts 1, bei welchem der Zwischenbereich 7 eine wellenförmige Struktur 12 aufweist, wodurch der Kriechweg 13 für einen elektrischen Strom vom ersten Endbereich 5 zum zweiten Endbereich 6 verlängert wird. Im vorliegenden Ausführungsbeispiel sind der erste Endbereich 5 und der zweite Endbereich 6 angespitzt und mit metallisierten Oberflächen 4 ausgestattet, um ein Einsetzen und Einlöten in Wabenkörper zu erleichtern.

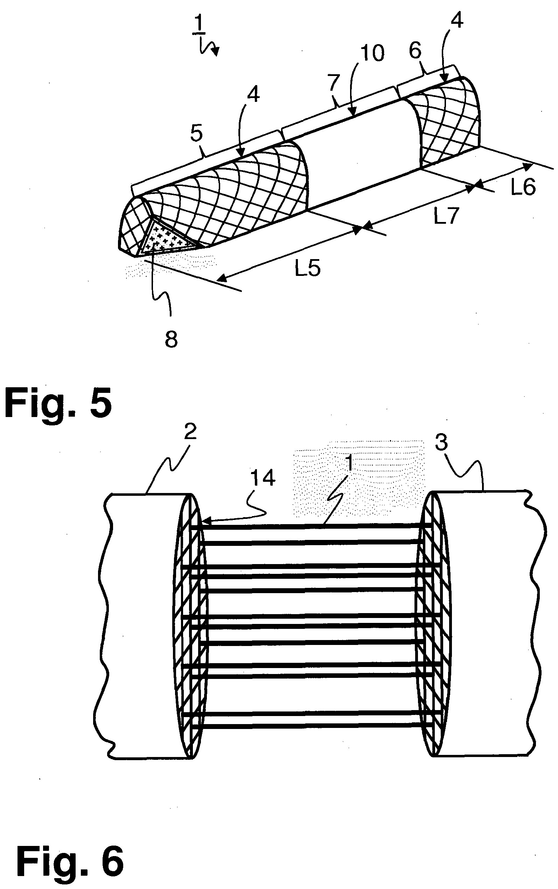

Fig. 5 zeigt einen erfindungsgemäßen Stützstift 1 mit an seine Verwendung angepasster Querschnittsform. Metallische Wabenkörper aus abwechselnden Lagen glatter und gewellter Bleche haben typische Formen ihrer Waben, an die erfindungsgemäße Stützstifte 1 angepasst werden können. Der dargestellte Stift 1 hat wiederum einen keramischen Kern 8 und zwei Endbereiche 5, 6 mit metallisierten Oberflächen 4.

Fig. 6 zeigt schematisch eine typische Anwendung von erfindungsgemäßen Stützstiften 1 zwischen einem ersten Wabenkörper 2 und einem elektrisch beheizbaren Wabenkörper 3. Mehrere Stützstifte 1 werden in die Waben 14 des ersten Wabenkörpers 2 und des elektrisch beheizbaren Wabenkörpers 3 eingesetzt und dort vorzugsweise eingelötet, um die gesamte Anordnung zu stabilisieren bei gleichzeitiger guter elektrischer Isolation.

Die vorliegende Erfindung eignet sich besonders für die Stabilisierung elektrisch beheizbarer Wabenkörper in Abgasbehandlungssystemen von Verbrennungsmotoren, insbesondere bei Kraftfahrzeugen. Bei Verwendung von höheren elektrischen Spannungen, beispielsweise 48 V, für elektrisch beheizbare Wabenkörper wird so eine gute elektrische Isolierung auch in Rußpartikel führenden Abgasanlagen sichergestellt bei gleichzeitiger sicherer Halterung und Unterdrückung von Schwingungen.

### Bezugszeichenliste

- 1: Stütz stift
- 2: erster Wabenkörper
- 3: elektrisch beheizbarer Wabenkörper
- 4: metallisierte Oberfläche eines Endbereiches
- 5: erster Endbereich
- 6: zweiter Endbereich
- 7: Zwischenbereich
- 8: Kern
- 9: Querschnittsfläche des ersten Endbereiches
- 10: Oberfläche des Zwischenbereiches
- 11: vorstehender Kragen
- 12: Struktur
- 13: Kriechweg
- 14: Wabe
- 15: Querschnittsfläche des zweiten Endbereiches
- L7: Länge des Zwischenbereiches
- L5: Länge des ersten Endbereiches
- L6: Länge des zweiten Endbereiches

## Patentansprüche

1. Stützstift (1) zur Abstützung eines elektrisch beheizbaren Wabenkörpers (3) an einem ersten Wabenkörper (2), wobei der Stützstift (1) einen ersten Endbereich (5), einen zweiten Endbereich (6) und einen Zwischenbereich (7) hat, **dadurch gekennzeichnet, dass** der Stützstift (1) einen Kern (8) aus keramischem, elektrisch nicht leitfähigem Material und an mindestens einem Endbereich (5; 6) eine metallisierte Oberfläche (4) und einen elektrisch nicht leitfähigen Zwischenbereich (7) mit einer Länge (L7) von mindestens 3 mm aufweiset.

2. Stützstift (1) nach Anspruch 1, **dadurch gekennzeichnet, dass** beide Endbereiche (5, 6) metallisiert sind.

3. Stützstift (1) nach Anspruch 1 oder 2, **dadurch gekennzeichnet, dass** der erste Endbereich (5) eine geringere Querschnittsfläche (9) aufweist als die Querschnittsfläche (15) des zweiten Endbereiches (6).

4. Stützstift (1) nach einem der vorhergehenden Ansprüche, **dadurch gekennzeichnet, dass** der Stützstift (1) rotationssymmetrisch ausgebildet ist.

5. Stützstift (1) nach einem der vorhergehenden Ansprüche, **dadurch gekennzeichnet, dass** der Zwischenbereich (7) eine Oberfläche (10) aufweist, die die Ablagerung von Ruß erschwert.

6. Stützstift (1) nach einem der vorhergehenden Ansprüche, **dadurch gekennzeichnet, dass** zwischen mindestens einem Endbereich (5; 6) und dem Zwischenbereich (7) ein vorstehender Kragen (11) vorhanden ist.

7. Stützstift (1) nach einem der vorhergehenden Ansprüche, **dadurch gekennzeichnet, dass** der Zwischenbereich (7) eine Struktur (12) aufweist, die den Kriechweg (13) für an seiner Oberfläche (10) fließende elektrische Kriechströme zwischen dem ersten Endbereich (5) und dem zweiten (6) Endbereich verlängert.

8. Stützstift (1) nach Anspruch 7, **dadurch gekennzeichnet, dass** die Struktur (12) die Form zumindest Wellungen, Nuten oder Verdickungen hat.

9. Stützstift (1) nach einem der vorhergehenden Ansprüche, **dadurch gekennzeichnet, dass** mindestens ein Endbereich (5; 6) angespitzt ist.

10. Stützstift (1) nach einem der vorhergehenden Ansprüche, **dadurch gekennzeichnet, dass** der Stützstift (1) mit mindestens einem Endbereich (5; 6) in eine Wabe (14) eines Wabenkörpers (2; 3) eingelötet ist.

## Claims

1. Supporting pin (1) for supporting an electrically heatable honeycomb body (3) on a first honeycomb body (2), wherein the supporting pin (1) has a first end region (5), a second end region (6) and an intermediate region (7), **characterized in that** the supporting pin (1) has a core (8) made of electrically non-conductive ceramic material and a metallized surface (4) on at least one end region (5; 6) and an electrically non-conductive intermediate region (7) with a length (L7) of at least 3 mm.

2. Supporting pin (1) according to Claim 1, **characterized in that** both end regions (5, 6) are metallized.

3. Supporting pin (1) according to Claim 1 or 2, **characterized in that** the first end region (5) has a smaller cross-sectional area (9) than the cross-sectional area (15) of the second end region (6).

4. Supporting pin (1) according to one of the preceding claims, **characterized in that** the supporting pin (1) is rotationally symmetrical.

5. Supporting pin (1) according to one of the preceding claims, **characterized in that** the intermediate region (7) has a surface (10) that impairs the deposition of soot.

6. Supporting pin (1) according to one of the preceding claims, **characterized in that** a protruding collar (11) is provided between at least one end region (5; 6) and the intermediate region (7).

7. Supporting pin (1) according to one of the preceding claims, **characterized in that** the intermediate region (7) has a structure (12) that lengthens the creepage distance (13) between the first end region (5) and the second end region (6) for electric leakage currents flowing on the surface (10) of said intermediate region.

8. Supporting pin (1) according to Claim 7, **characterized in that** the structure (12) has the form at least of undulations, grooves or thickened portions.

9. Supporting pin (1) according to one of the preceding claims, **characterized in that** at least one end region (5; 6) is pointed.

10. Supporting pin (1) according to one of the preceding claims, **characterized in that** the supporting pin (1) is soldered via at least one end region (5; 6) into a honeycomb (14) of a honeycomb body (2; 3).

## Revendications

1. Broche (1) de support d'un corps (3) en nid-d'abeilles pouvant être chauffé électriquement sur un premier corps (2) en nid-d'abeilles, la broche (1) de support ayant une première partie (5) de bout, une deuxième partie (6) de bout et une partie (7) intermédiaire, **caractérisée en ce que** la broche (1) de support a une âme (8) en matériau céramique non-conducteur de l'électricité et, sur au moins une partie (5; 6) de bout, une surface (4) métallisée et une partie (7) intermédiaire non-conductrice de l'électricité d'une longueur (L7) d'au moins 3 mm.

2. Broche (1) de support suivant la revendication 1, **caractérisée en ce que** les deux parties (5, 6) de bout sont métallisées.

3. Broche (1) de support suivant la revendication 1 ou 2, **caractérisée en ce que** la première partie (5) de bout a une surface (9) de section transversale plus petite que la surface (15) de section transversale de la deuxième partie (6) de bout.

4. Broche (1) de support suivant l'une des revendications précédentes, **caractérisée en ce que** la broche (1) de support est de révolution.

5. Broche (1) de support suivant l'une des revendications précédentes, **caractérisée en ce que** la partie (7) intermédiaire a une surface (10), qui rend difficile le dépôt de suie.

6. Broche (1) de support suivant l'une des revendications précédentes, **caractérisée en ce qu'**un collet (11) en saillie est présent entre au moins une partie (5; 6) de bout et la partie (7) intermédiaire.

7. Broche (1) de support suivant l'une des revendications précédentes, **caractérisée en ce que** la partie (7) intermédiaire a une structure, qui allonge la distance (8) de cheminement de courants électriques de fuite passant sur sa surface (10) entre la première partie (5) de bout et la deuxième partie (6) de bout.

8. Broche (1) de support suivant la revendication 7, **caractérisée en ce que** la structure (12) a la forme au moins d'ondulations, de rainures ou d'épaississements.

9. Broche (1) de support suivant l'une des revendications précédentes, **caractérisée en ce qu'**au moins une partie (5; 6) de bout est pointue.

10. Broche (1) de support suivant l'une des revendications précédentes, **caractérisée en ce que** la broche (1) de support est brasée par au moins une partie (5; 6) de bout dans un nid-d'abeilles (14) d'un corps (2; 3) en nid-d'abeilles.
